# EUROPEAN PATENT APPLICATION

(11) **EP 4 653 295 A1**
(43) Date of publication of application: **26.11.2025**
(21) Application number: 25153167.9
(22) Date of filing: 21.01.2025
(51) Int. Cl.: B62D 25/08

(54) **FRONT CABIN STIFFENER, FRONT CABIN ASSEMBLY AND VEHICLE**

(30) Priority: 22.05.2024 CN 202410641950
(71) Applicant: Xiaomi EV Technology Co., Ltd., 100176 Beijing (CN)
(72) Inventor: DAI, Tailiang, Beijing, 100176 (CN); CHEN, Wei, Beijing, 100176 (CN); JIANG, Daxiu, Beijing, 100176 (CN); WANG, Xuefeng, Beijing, 100176 (CN); LING, Zhengzhong, Beijing, 100176 (CN); CANG, Jiwei, Beijing, 100176 (CN)
(74) Representative: Stöckeler, Ferdinand

(57) **Abstract**

The invention relates to a front cabin stiffener (5), a front cabin assembly and a vehicle. The present front cabin stiffener (5) includes a stiffening beam body (1), where a connecting portion extending in a first direction is arranged on the stiffening beam body (1), and the connecting portion is used to be connected with a front shock absorber tower; and the stiffening beam body (1) is set to be able to translate relative to the front shock absorber tower in a second direction when the front shock absorber tower is collided, a support portion is formed on the stiffening beam body (1), and the support portion is set to be able to make contact with the front shock absorber tower after the stiffening beam body (1) is translated, so as to push the stiffening beam body (1) to deflect away from the front shock absorber tower in the first direction.

## Description

### TECHNICAL FIELD

The invention relates to the technical field of vehicle manufacturing, in particular to a front cabin stiffener, a front cabin assembly and a vehicle.

### BACKGROUND OF THE INVENTION

In the related art, stiffeners of front cabins of vehicles are prone to causing fractures due to shear loads on relevant connecting positions when subjected to small offset collisions, which affects overall structurality and stability of the front cabins.

### SUMMARY OF THE INVENTION

In order to solve problems existing in the related art, according to one aspect of the invention, the invention provides a front cabin stiffener, including a stiffening beam body, where a connecting portion extending in a first direction is arranged on the stiffening beam body, and the connecting portion is used to be connected with a front shock absorber tower; the stiffening beam body is set to be able to translate relative to the front shock absorber tower in a second direction when the front shock absorber tower is collided, a support portion is formed on the stiffening beam body, and the support portion is set to be able to make contact with the front shock absorber tower after the stiffening beam body is translated, so as to push the stiffening beam body to deflect away from the front shock absorber tower in the first direction, and
the first direction is set to be a vertical direction of a vehicle, and the second direction is set to be a transverse direction of the vehicle.

In some possible embodiments, the support portion includes a first support portion and a second support portion, and the first support portion and the second support portion are respectively located on two sides of the connecting portion in the second direction;
where the stiffening beam body has a first state and a second state relative to the front shock absorber tower, when the front shock absorber tower is not collided, the stiffening beam body is in the first state, and in the second direction, the first support portion and the second support portion do not make contact with the front shock absorber tower, and
when the front shock absorber tower is collided, the stiffening beam body is in the second state, and in the second direction, the first support portion and the second support portion make contact with the front shock absorber tower.

In some possible embodiments, in the first state and in the second direction, a second translational gap is reserved between the first support portion and the front shock absorber tower, a third translational gap is reserved between the second support portion and the front shock absorber tower, and a translational stroke of the stiffening beam body is set to be a length dimension of the second translational gap and/or the third translational gap in the second direction.

In some possible embodiments, the first support portion is constructed as a support baffle, and one side face of the support baffle in the second direction is constructed as a slope in the second direction, and is able to make contact with the front shock absorber tower.

In some possible embodiments, a guiding portion that is arranged obliquely in the second direction is formed on the front shock absorber tower, and the guiding portion is able to be in sliding contact with one side face of the support baffle in the second direction, and
where, when the stiffening beam body is in the second state, cooperation between the guiding portion and the support baffle is able to guide the stiffening beam body, so that the stiffening beam body deflects away from the front shock absorber tower in the first direction.

In some possible embodiments, the support baffle includes a first side plate extending in a third direction and two second side plates extending in the second direction, the two second side plates are arranged opposite to each other, two ends of the first side plate are respectively connected to the two second side plates, and a second translational gap is reserved between the first side plate and the front shock absorber tower;
where, the third direction is set to be a forward direction of the vehicle;
optionally, a surface of the first side plate close to the front shock absorber tower protrudes in a direction away from the front shock absorber tower, so that the first side plate forms an arc-shaped plate.

In some possible embodiments, the second support portion is constructed as a support rib, the support rib extends in the second direction to protrude from the stiffening beam body, and one end of the support rib protruding from the stiffening beam body in the second direction is able to make contact with the front shock absorber tower.

In some possible embodiments, an abutting portion is formed on the front shock absorber tower, and the abutting portion is able to abut against one end of the support rib protruding from the stiffening beam body in the second direction, and
where, when the stiffening beam body is in the second state, cooperation between the abutting portion and the support rib is able to push the stiffening beam body to deflect away from the front shock absorber tower in the first direction.

In some possible embodiments, the support rib is constructed as extending in the second direction and oblique towards a front end of the vehicle, and the support rib is located on one side of the stiffening beam body facing away from a central axis of the vehicle extending in a third direction.

In some possible embodiments, the connecting portion includes a connecting bolt, a connecting hole is formed in the stiffening beam body, the connecting bolt penetrates through the connecting hole to be connected to the front shock absorber tower, a first translational gap is reserved between a hole wall of at least one side of the connecting hole and a side wall of the connecting bolt, and a translational stroke of the stiffening beam body is set to be a length dimension of the first translational gap in the second direction.

In some possible embodiments, a first translational gap is reserved between a hole wall of one side of the connecting hole close to a central axis of the vehicle extending in a third direction and the side wall of the connecting bolt, so that in the second direction, the first translational gap is close to the central axis of the vehicle extending in the third direction;
optionally, in the first state and in the second direction, a second translational gap is reserved between the first support portion and the front shock absorber tower, a third translational gap is reserved between the second support portion and the front shock absorber tower, and a width of the first translational gap, a width of the second translational gap, and a width of the third translational gap are approximately the same.

In some possible embodiments, the connecting hole has two first axes extending in the first direction, the front shock absorber tower is provided with a screw hole that cooperates with the connecting bolt, the screw hole has a second axis extending in the first direction, one of the first axes overlaps with the second axis, and the other of the first axes does not overlap with the second axis;
optionally, the connecting hole is constructed as an obround hole or an elliptical hole.

In some possible embodiments, the stiffening beam body includes a first cross beam, a second cross beam, and two oblique beams arranged opposite to each other, the first cross beam and the second cross beam both extend in the second direction, the oblique beams extend in the third direction, one end of each of the two oblique beams are respectively connected to two ends of the first cross beam, an other end of each of the two oblique beams are connected to each other to make the stiffening beam body form a triangle, two ends of the second cross beam are respectively connected to middles of the two oblique beams, and two ends of the first cross beam and/or the second cross beam are each provided with the connecting portion and the support portion.

A second aspect of the invention further provides a front cabin assembly, including a front shock absorber tower and the front cabin stiffener above, where a connecting portion of the front cabin stiffener is connected to the front shock absorber tower.

A third aspect of the invention further provides a vehicle, including the front cabin stiffener above, or the front cabin assembly above.

In the above technical solution, the stiffening beam body can be connected to the front shock absorber tower through the arranged connecting portion, and meanwhile, the stiffening beam body can be connected to a front enclosing plate, and thus integrity and stability of a front cabin of the vehicle can be improved. By setting the stiffening beam body to be able to translate, the stiffening beam body may translate relative to the front shock absorber tower when the front cabin is collided (subjected to a collision), that is, the front shock absorber tower is collided, such as subjected to a small offset collision. After the stiffening beam body is translated, the support portion can make contact with the front shock absorber tower. At this time, the front shock absorber tower can exert an abutting effect on the support portion, and interaction action between the abutting effect and continuous movement of the support portion can push the stiffening beam body to deflect away from the front shock absorber tower in the first direction. In this way, a shear load acting on the connecting portion is changed to combined action of the shear load and a tensile load, the shear load directly acting on the connecting portion is reduced, a probability of fracture of the connecting portion is reduced, overall structurality and stability of the front cabin are improved, and a passenger cabin is protected. The present front cabin stiffener reduces the shear load borne on the connecting portion through a translational design, compared to a manner of simply increasing a thickness of the front cabin stiffener, costs are low, and a weight of the entire vehicle is not increased at the same time.

It is to be understood that the above general description and the following detailed description are merely for example and explanatory, and do not limit the invention.

### BRIEF DESCRIPTION OF DRAWINGS

Accompanying drawings here, which are incorporated in and constitute a part of this specification, illustrate embodiments consistent with the invention and together with the specification, serve to explain the principles of the invention.
Fig. 1 is a schematic stereoscopic diagram of a front cabin stiffener according to an embodiment of the invention.
Fig. 2 is a schematic enlarged diagram of a position A in Fig. 1 according to an embodiment of the invention.
Fig. 3 is a partial sectional view of a stiffening beam body in a first position according to an embodiment of the invention.
Fig. 4 is a schematic enlarged diagram of a position B in Fig. 3 according to an embodiment of the invention.
Fig. 5 is a partial sectional view of a stiffening beam body in a second position according to an embodiment of the invention.
Fig. 6 is a schematic enlarged diagram of a position C in Fig. 5 according to an embodiment of the invention.
Fig. 7 is a schematic diagram of a partial structure of a front cabin assembly according to an embodiment of the invention.
Fig. 8 is a schematic structural diagram of a front shock absorber tower according to an embodiment of the invention.
Fig. 9 is a test diagram of a shear load borne on a connecting bolt in a second direction in the related art.
Fig. 10 is a test diagram of a shear load borne on a connecting bolt of a front cabin assembly in a second direction according to an embodiment of the invention.
FIG. 11 is a block diagram of a vehicle according to an example.
FIG. 12 is a block diagram of a vehicle according to another example.

### DETAILED DESCRIPTION OF THE INVENTION

The specific embodiments of the invention are illustrated in detail below with reference to the accompanying drawings. It is to be understood that the specific embodiments described here are merely used to illustrate and explain the invention and not to limit the invention.

In the disclosure, unless otherwise stated, directional words such as "up, down, left, right, front and rear" are usually used relative to a normal traveling state of a vehicle. In response to determining that the vehicle travels normally, a direction facing a vehicle head is "front", a direction facing a vehicle tail is "rear", a direction facing a roof is "up", a direction facing a floor is "down", a direction facing a left wheel is "left", and a direction facing a right wheel is "right", where a first direction is set to be a vertical direction of the vehicle, a second direction is set to be a transverse direction of the vehicle, and a third direction is set to be a forward direction of the vehicle. "Internal and external" refer to an interior and exterior of a corresponding structure contour. Moreover, the terms "first", "second", and the like are used only to distinguish descriptions and cannot be understood as indicating or implying relative or der or importance.

In addition, a term "cross beam" in the disclosure refers to a beam extending in the transverse direction of the vehicle, and all "longitudinal beams" refer to beams extending in the forward direction of the vehicle. A term "front collision" in the disclosure refers to a situation where a front part of the vehicle is collided, while "side collision" refers to a situation where a side face of the vehicle is collided. In addition, unless otherwise specified, meanings of terms such as "front shock absorber tower" and "passenger cabin" mentioned in the various embodiments of the invention are their well-known meanings in the art.

Small offset collision, as one of the most severe working conditions for entire vehicle collisions, needs a front cabin structure to maintain sufficient strength and stability, and each force transferring path can effectively disperse transferred force and absorb energy, so as to reduce a load borne on the passenger cabin. In order to improve a strength and stability of the front cabin structure, a stiffener is partially arranged.

In the related art, the stiffener of the front cabin of the vehicle is prone to causing fracture due to a shear load on a relevant connecting position when subjected to the small offset collision, which affects overall structurality and stability of the front cabin.

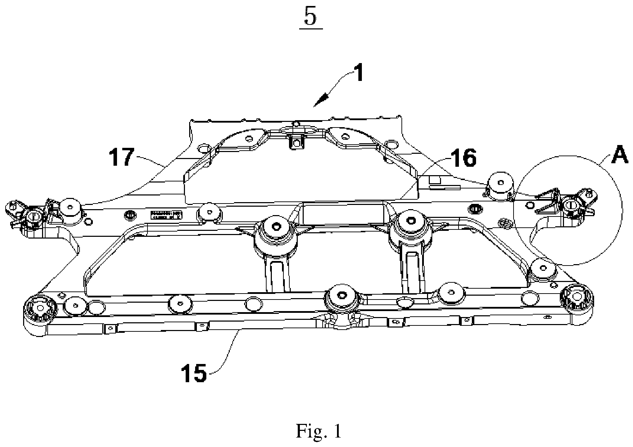

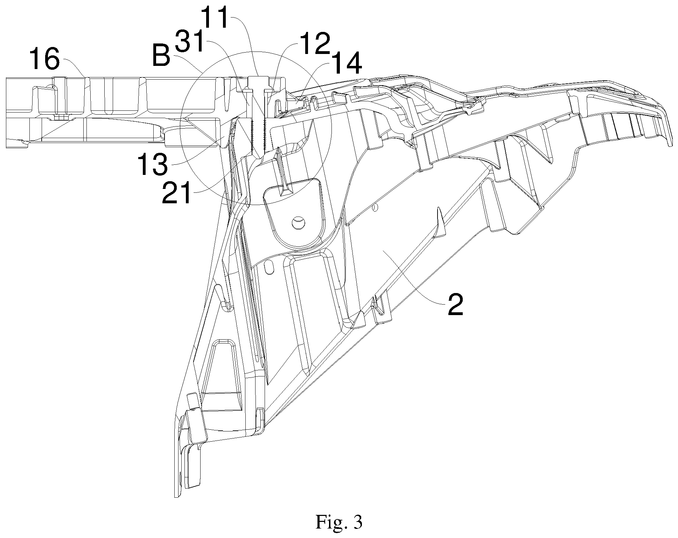

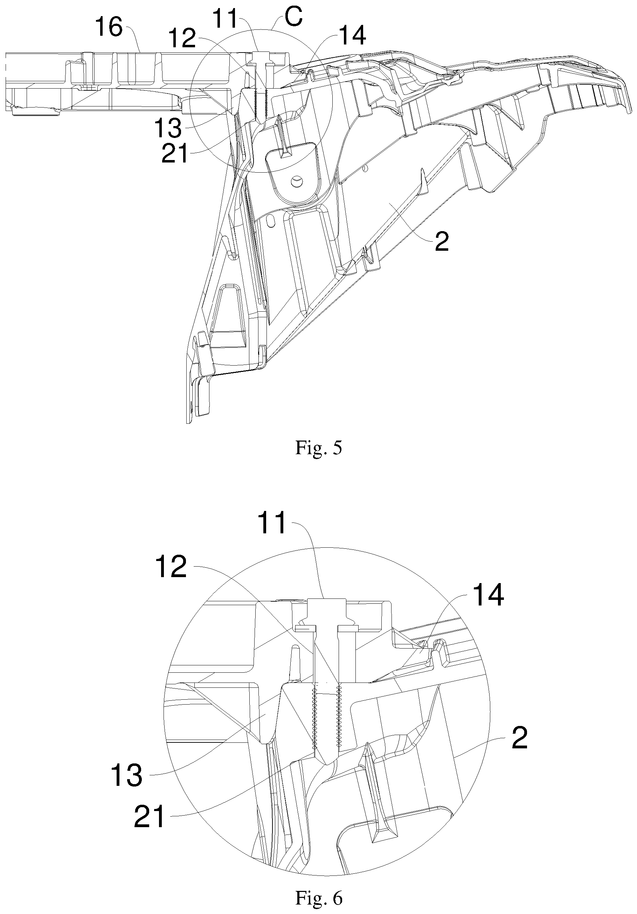

To this end, as shown in Fig. 1 to Fig. 6, one aspect of the invention provides a front cabin stiffener 5, including a stiffening beam body 1, where a connecting portion 11 extending in a first direction is arranged on the stiffening beam body 1, and the connecting portion 11 is used to be connected with a front shock absorber tower 2.

The stiffening beam body 1 is set to be able to translate relative to the front shock absorber tower 2 in a second direction when the front shock absorber tower 2 is collided, a support portion 18 is formed on the stiffening beam body 1, and the support portion 18 is set to be able to make contact with the front shock absorber tower 2 after the stiffening beam body 1 is translated, so as to push the stiffening beam body 1 to deflect away from the front shock absorber tower 2 in the first direction.

The first direction is set to be a vertical direction of a vehicle, and the second direction is set to be a transverse direction of the vehicle.

In the first direction, the stiffening beam body 1 is located above the front shock absorber tower 2. It is to be noted that translation of the stiffening beam body 1 refers to small-range movement caused by instantaneous strong-load acting force generated when the front shock absorber tower 2 is collided. In a case that the vehicle is in normal use, due to a connecting effect of the connecting portion 11, the stiffening beam body 1 and the front shock absorber tower 2 remain fixed and will not undergo relative translation arbitrarily. That is to say, the front shock absorber tower 2 moves due to collision, causing the stiffening beam body 1 and the front shock absorber tower 2 to move relative to each other.

In the above technical solution, the stiffening beam body 1 can be connected to the front shock absorber tower 2 through the arranged connecting portion 11, meanwhile, the stiffening beam body 1 can be connected to a front enclosing plate 4, and thus integrity and stability of a front cabin of the vehicle can be improved. By setting the stiffening beam body 1 to be able to translate, the stiffening beam body 1 may translate relative to the front shock absorber tower 2 when the front cabin is collided, that is, the front shock absorber tower 2 is collided, such as subjected to a small offset collision. After the stiffening beam body 1 is translated, the support portion 18 can make contact with the front shock absorber tower 2. At this time, the front shock absorber tower 2 can exert an abutting effect on the support portion 18, and interaction action between the abutting effect and continuous movement of the support portion 18 can push the stiffening beam body 1 to deflect away from the front shock absorber tower 2 in the first direction. In this way, a shear load acting on the connecting portion 11 is changed to combined action of the shear load and a tensile load, the shear load directly acting on the connecting portion 11 is reduced, a probability of fracture of the connecting portion 11 is reduced, overall structurality and stability of the front cabin are improved, and a passenger cabin is protected. The present front cabin stiffener reduces the shear load borne on the connecting portion 11 through a translational design, compared to a manner of simply increasing a thickness of the front cabin stiffener, costs are low, and a weight of the entire vehicle is not increased at the same time.

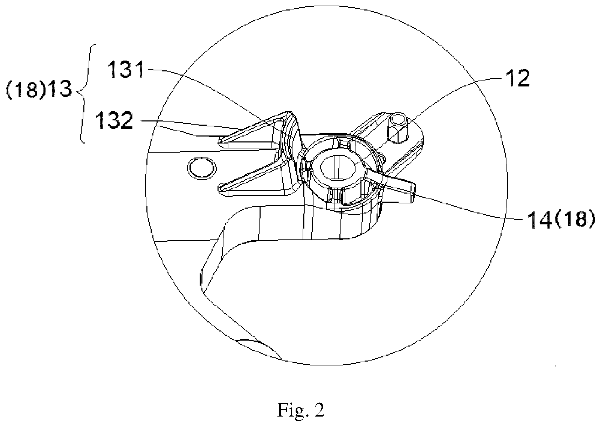

In some possible embodiments of the invention, as shown in Figs. 2 to 4, the connecting portion 11 includes a connecting bolt 111, a connecting hole 12 is formed in the stiffening beam body 1, the connecting bolt 111 penetrates through the connecting hole 12 to be connected to the front shock absorber tower 2, a first translational gap 31 is reserved between a hole wall of at least one side of the connecting hole 12 and a side wall of the connecting bolt 111, and a translational stroke of the stiffening beam body 1 is set to be a length dimension of the first translational gap 31 in the second direction.

The connecting bolt 111 penetrates through the connecting hole 12 and then is in threaded connection with the front shock absorber tower 2, and the connecting bolt 111 extrudes and fixes the stiffening beam body 1 on the front shock absorber tower 2. During normal use of the vehicle, extrusion force generated by the connecting bolt 111 causes the stiffening beam body 1 to be connected and fixed to the front shock absorber tower 2. When a collision occurs, acting force is transferred to the stiffening beam body 1, due to the existence of the first translational gap 31, the stiffening beam body 1 translates according to a stroke length, then the hole wall of the connecting hole 12 makes contact with the connecting bolt 111 before the acting force is transferred to the connecting bolt 111, thus the translation of the stiffening beam body 1 is achieved, and the acting force is prevented from directly acting on the connecting bolt 111.

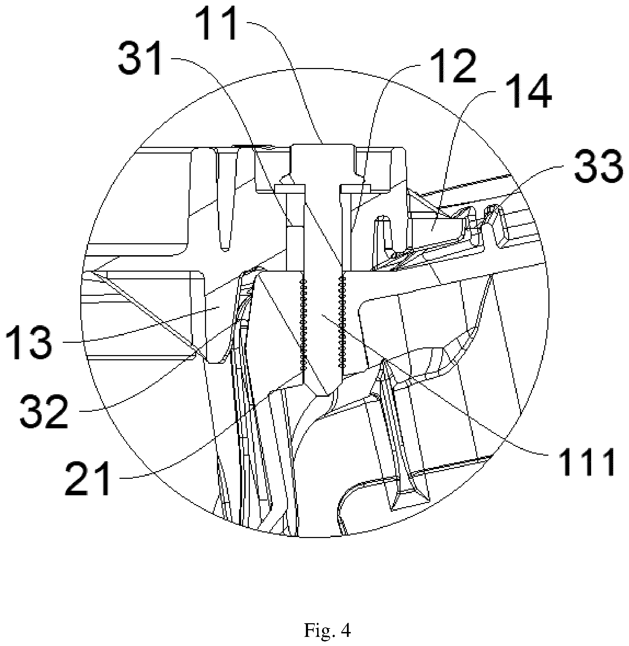

In some possible embodiments, as shown in Fig. 4, an aperture of the connecting hole 12 is greater than a diameter of the connecting bolt 111, and thus the first translational gap 31 exists between the hole wall of the connecting hole 12 and the connecting bolt 111.

In some possible embodiments of the invention, as shown in Fig. 4, a first translational gap 31 is reserved between a hole wall of one side of the connecting hole 12 close to a central axis of the vehicle extending in a third direction and the side wall of the connecting bolt 111, so that in the second direction, the first translational gap 31 is close to the central axis of the vehicle extending in the third direction. Through such arrangement, when the front shock absorber tower 2 is subjected to the small offset collision and the front shock absorber tower 2 invades close to the central axis of the vehicle extending in the third direction, the stiffening beam body 1 translates relative to the front shock absorber tower 2 in an opposite direction. In this way, the first translational gap 31 can precisely allow for relative translation between the front shock absorber tower 2 and the stiffening beam body 1.

In some possible embodiments of the invention, the connecting hole 12 has two first axes extending in the first direction, the front shock absorber tower 2 is provided with a screw hole 21 that cooperates with the connecting bolt 111, the screw hole 21 has a second axis extending in the first direction, one of the first axes overlaps with the second axis, and the other of the first axes does not overlap with the second axis. Through such arrangement, the connecting hole 12 and the screw hole 21 can be arranged in a misplaced manner, so that the first translational gap 31 between the hole wall of the connecting hole 12 and the connecting bolt 111 can be increased, that is to say, a length dimension of the first translational gap 31 in the second direction increases, which can facilitate the movement of the stiffening beam body 1.

In some examples, the aperture of the connecting hole 12 is greater than an aperture of the screw hole 21, without affecting a situation that the connecting bolt 111 penetrates through the connecting hole 12 to be connected to the screw hole 21.

In other possible embodiments of the invention, the connecting hole 12 has a first axis extending in the first direction, the front shock absorber tower 2 is provided with a screw hole 21 that cooperates with the connecting bolt 111, the screw hole 21 has a second axis extending in the first direction, the first axis and the second axis are parallel and overlap, and the aperture of the connecting hole 12 is greater than the aperture of the screw hole 21. The aperture of the connecting hole 12 is made to be greater than the aperture of the screw hole 21, so that the first translational gap 31 may be generated between the hole wall of the connecting hole 12 and the connecting bolt 111.

In some possible embodiments of the invention, the connecting hole 12 is constructed as an obround hole or an elliptical hole. Thus, the connecting bolt 111 may translate within the connecting hole 12. The connecting hole 12 has two first axes extending in the first direction, where one of the first axes may overlap with the second axis, and the other of the first axes may not overlap with the second axis.

In some possible other embodiments of the invention, the connecting hole 12 is constructed as a circular hole, and an aperture of the circular hole is greater than the aperture of the screw hole 21. An axis of the circular hole and an axis of the screw hole 21 do not overlap, that is, are arranged in a misplaced manner. An axis of the connecting bolt 111 and the axis of the screw hole 21 overlap, and the axis of the connecting bolt 111 and the axis of the circular hole do not overlap, and are also misplaced. This also allows for a first translational gap 31 between the connecting bolt 111 and a hole wall of the circular hole.

In some possible embodiments of the invention, as shown in Figs. 2 to 6, the support portion 18 includes a first support portion 13 and a second support portion 14, and the first support portion 13 and the second support portion 14 are respectively located on two sides of the connecting portion 11 in the second direction. By mutual cooperation between the first support portion 13 and the second support portion 14, the stiffening beam body 1 can be advantageously pushed to deflect away from the front shock absorber tower 2 in the first direction, resulting in a tensile load on the connecting portion 11. In addition, after the first support portion 13 and the second support portion 14 make contact with the front shock absorber tower 2, a contact area between the first support portion as well as the second support portion and the front shock absorber tower 2 can further be increased, and it can also play a role in reducing the shear load on the connecting portion 11.

The stiffening beam body 1 has a first state and a second state relative to the front shock absorber tower 2, when the front shock absorber tower 2 is not collided, the stiffening beam body 1 is in the first state, and in the second direction, the first support portion 13 and the second support portion 14 do not make contact with the front shock absorber tower 2.

When the front shock absorber tower 2 is collided, the stiffening beam body 1 is in the second state, and in the second direction, the first support portion 13 and the second support portion 14 make contact with the front shock absorber tower 2. After the first support portion 13 and the second support portion 14 make contact with the front shock absorber tower 2, due to a mutual extrusion effect, the stiffening beam body 1 will deform in the first direction. At this time, because the stiffening beam body 1 and the front shock absorber tower 2 are kept in connection through the connecting portion 11, a tensile effect will be generated on the connecting portion 11, and a shear effect on the connecting portion 11 is reduced.

In some possible embodiments of the invention, in the first state and in the second direction, a second translational gap 32 is reserved between the first support portion 13 and the front shock absorber tower 2, a third translational gap 33 is reserved between the second support portion 14 and the front shock absorber tower 2, and a translational stroke of the stiffening beam body 1 is set to be a length dimension of the second translational gap 32 and/or the third translational gap 33 in the second direction, that is, a translational stroke of the stiffening beam body 1 is set to be a length dimension of the second translational gap 32 in the second direction, or, a translational stroke of the stiffening beam body 1 is set to be a length dimension of the third translational gap 33 in the second direction, or, a translational stroke of the stiffening beam body 1 is set to be a length dimension of the second translational gap 32 and the third translational gap 33 in the second direction. Through such arrangement, the translation of the stiffening beam body 1 relative to the front shock absorber tower 2 in the second direction is facilitated, and after translating according to the second translational gap 32 and/or the third translational gap 33, the first support portion 13 and the second support portion 14 may respectively make contact with the front shock absorber tower 2. It is to be noted that a width of the second translational gap 32 and a width of the third translational gap 33 may be exactly the same, roughly the same, or may have a small difference. Due to the continuous translation of the stiffening beam body 1, even if there is a small difference in the width of the second translational gap 32 and the width of the third translational gap 33, it can still ensure that the first support portion 13 and the second support portion 14 make contact with the front shock absorber tower 2 respectively. The width of the second translational gap 32 and the width of the third translational gap 33 can also be exactly the same, or roughly the same as a width of the first translational gap 31, or have a small difference with the width of the first translational gap. Where, the width refers to the length dimension in the second direction.

In some possible embodiments of the invention, the first support portion 13 is constructed as a support baffle, and one side face of the support baffle in the second direction is constructed as a slope in the second direction, and is able to make contact with the front shock absorber tower 2.

In some possible embodiments, a guiding portion 23 that is arranged obliquely in the second direction is formed on the front shock absorber tower 2, and the guiding portion 23 is able to be in sliding contact with one side face of the support baffle in the second direction.

When the stiffening beam body 1 is in the second state, cooperation between the guiding portion 23 and the support baffle is able to guide the stiffening beam body 1, so that the stiffening beam body 1 deflects away from the front shock absorber tower 2 in the first direction.

In some possible embodiments, the second support portion 14 is constructed as a support rib, the support rib extends in the second direction to protrude from the stiffening beam body 1, and one end of the support rib protruding from the stiffening beam body 1 in the second direction is able to make contact with the front shock absorber tower 2.

In some possible embodiments, an abutting portion 22 is formed on the front shock absorber tower 2, and the abutting portion 22 is able to abut against one end of the support rib protruding from the stiffening beam body 1 in the second direction;

When the stiffening beam body 1 is in the second state, cooperation between the abutting portion 22 and the support rib can push the stiffening beam body 1 to drive the stiffening beam body 1 to deflect.

One end of the support rib protruding from the stiffening beam body 1 in the second direction serves as a fulcrum for contact with the front shock absorber tower 2, and the support baffle serves to increase a contact area with the front shock absorber tower 2 and achieves a guiding effect, so that the stiffening beam body 1 deflects in a direction away from the front shock absorber tower 2 in the second direction after being pushed, and generates a tensile effect on the connecting portion 11.

The second translational gap 32 refers to a gap between one side face of the support baffle in the second direction and the front shock absorber tower 2, and the third translational gap 33 refers to a gap between one end of the support rib protruding from the stiffening beam body 1 in the second direction and the front shock absorber tower 2.

In addition, it is to be noted that when length dimensions of the first translational gap 31, the second translational gap 32, and the third translational gap 33 in the second direction are equal, after the stiffening beam body 1 is translated, the hole wall of the connecting hole 12 makes contact with the connecting bolt 111, meanwhile, the support baffle and the support rib both make contact with the front shock absorber tower 2, thus contact of a plurality of contact surfaces is generated, the contact area may also be increased, and a probability of fracture of the connecting bolt 111 under a shear load can also be reduced.

In some possible embodiments of the invention, as shown in Figs. 1 and 2, the support baffle includes a first side plate 131 extending in a third direction and two second side plates 132 extending in the second direction, the two second side plates 132 are arranged opposite to each other, two ends of the first side plate 131 are respectively connected to the two second side plates 132, and a second translational gap 32 is reserved between the first side plate 131 and the front shock absorber tower 2, where the third direction is set to be a forward direction of the vehicle 7.

The first side plate 131 is used to make contact with the front shock absorber tower 2 after the stiffening beam body 1 is translated. That is to say, during normal use of the vehicle, there is a second translational gap 32 between the first side plate 131 and the front shock absorber tower 2. The second side plate 132 is used to provide a support effect for the first side plate 131, so as to improve a structural strength when the first side plate 131 makes contact with the front shock absorber tower 2 after a collision occurs, more shear loads can be borne, and the shear load acting on the connecting portion 11 is reduced.

In some possible embodiments of the invention, as shown in Figs. 2 to 6, a surface of the first side plate 131 close to the front shock absorber tower 2 protrudes in a direction away from the front shock absorber tower 2, so that the first side plate 131 forms an arc-shaped plate. Through such arrangement, it can facilitate the formation of the second translational gap 32 between the first side plate 131 and the front shock absorber tower 2, and facilitate the relative translation between the front shock absorber tower 2 and the stiffening beam body 1 after the front shock absorber tower 2 is collided, which can provide the guiding effect for the stiffening beam body 1, and is more conducive to a tendency of the stiffening beam body 1 to deflect in the direction away from the front shock absorber tower 2 in the first direction.

In some possible embodiments of the invention, in the first direction, the support baffle is located below the stiffening beam body 1, and in the second direction, the support baffle is located on one side of the front shock absorber tower 2 close to a central axis of the vehicle 7 extending in the third direction.

In some possible embodiments, the surface where the first side plate 131 and the front shock absorber tower 2 make contact with each other is set as an obliquely downward surface, so that after the first side plate 131 makes contact with the front shock absorber tower 2, the shear effect generated on the connecting bolt 111 after the collision can be changed from a simple second direction to a shear acting force that can be dispersed in the second direction and the third direction, which is more conducive to the tendency of the stiffening beam body 1 to deflect in the direction away from the front shock absorber tower 2 in the first direction, thus the force acted on the connecting bolt is changed, the connecting bolt is subjected to a tensile load, the shear load is reduced, and a risk of fracture of the connecting bolt is further reduced.

In some possible embodiments of the invention, the support rib is constructed as extending in the second direction and oblique towards a front end of the vehicle 7, and the support rib is located on one side of the stiffening beam body 1 facing away from the central axis of the vehicle extending in the third direction. Through such arrangement, the support rib can provide a support effect from an outer side to an inner side in the second direction, the shear load borne on the connecting bolt is further reduced, and the intrusion of the front cabin into a passenger cabin is avoided.

In some possible embodiments of the invention, as shown in Fig. 1, the stiffening beam body 1 includes a first cross beam 15, a second cross beam 16, and two oblique beams 17 arranged opposite to each other, the first cross beam 15 and the second cross beam 16 both extend in the second direction, the oblique beams 17 extend in the third direction, one end of each of the two oblique beams 17 are respectively connected to two ends of the first cross beam 15, an other end of each of the two oblique beams 17 are connected to each other to make the stiffening beam body 1 form a triangle, two ends of the first cross beam 15 and/or the second cross beam 16 are respectively connected to middles of the two oblique beams 17, and two ends of the second cross beam 16 are each provided with the connecting portion 11 and the support portion, that is, two ends of the first cross beam 15 are respectively connected to middles of the two oblique beams 17, or, two ends of the second cross beam 16 are respectively connected to middles of the two oblique beams 17, or, two ends of the first cross beam 15 and the second cross beam 16 are respectively connected to middles of the two oblique beams 17.

The two ends of the first cross beam 15 and the second cross beam 16 may be respectively connected to the front shock absorber towers 2 on two sides, and one ends of the two oblique beams 17 connected to each other may be connected to a front enclosing plate 4. Connecting holes 12 may be respectively formed in the two ends of the second cross beam 16, the connecting holes 12 have a first translational gap 31 with the corresponding connecting portion 11, and meanwhile, support baffles and support ribs may be respectively arranged at the two ends of the second cross beam 16.

In some possible embodiments, as shown in Figs. 1, 3 and 4, connecting portions 11 may be arranged at two ends of the first cross beam 15, connecting holes 12 may be respectively formed in the two ends of the first cross beam 15, the connecting holes 12 have a first translational gap 31 with the corresponding connecting portion 11, and meanwhile, support baffles and support ribs may be respectively arranged at the two ends of the first cross beam 15.

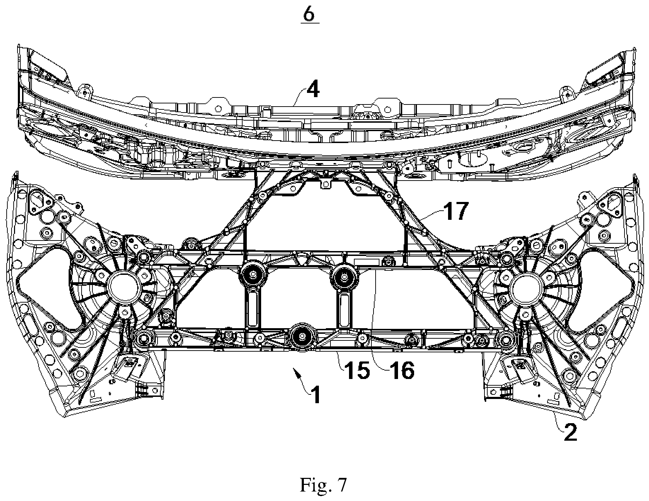

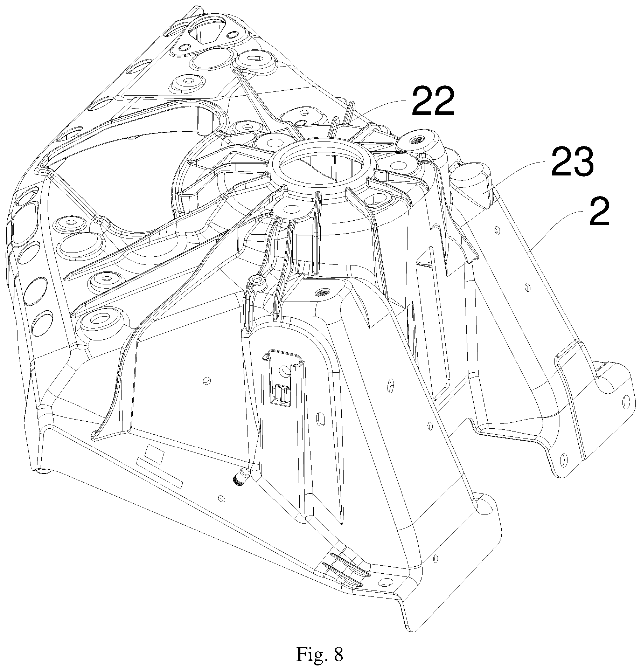

As shown in Fig. 7 and Fig. 8, a second aspect of the invention further provides a front cabin assembly 6, including a front shock absorber tower 2, a front enclosing plate 4 and the front cabin stiffener 5 above. A connecting portion 11 of the front cabin stiffener 5 is connected to the front shock absorber tower 2, and a stiffening beam body 1 is connected to the front enclosing plate 4.

In some possible embodiments of the invention, as shown in Fig. 8, an abutting portion 22 and a guiding portion 23 that is arranged obliquely in a second direction are formed on the front shock absorber tower 2, the guiding portion 23 is able to be in sliding contact with one side face of a support baffle in the second direction, and the abutting portion 22 is able to abut against one end of a support rib protruding from the stiffening beam body 1 in the second direction. Through such arrangement, cooperation with the support portion 18 can be facilitated, and a pushing effect on the stiffening beam body 1 is achieved.

In some examples, a convex rib that cooperates with the support rib is formed on the front shock absorber tower 2, the convex rib is the abutting portion 22, one surface of the front shock absorber tower 2 cooperating with the support baffle is constructed as an oblique surface, and the oblique surface is the guiding portion 23 and is obliqued towards the connecting portion 11. Such arrangement can facilitate the push of the stiffening beam body 1 to deflect away from the front shock absorber tower 2 in a first direction.

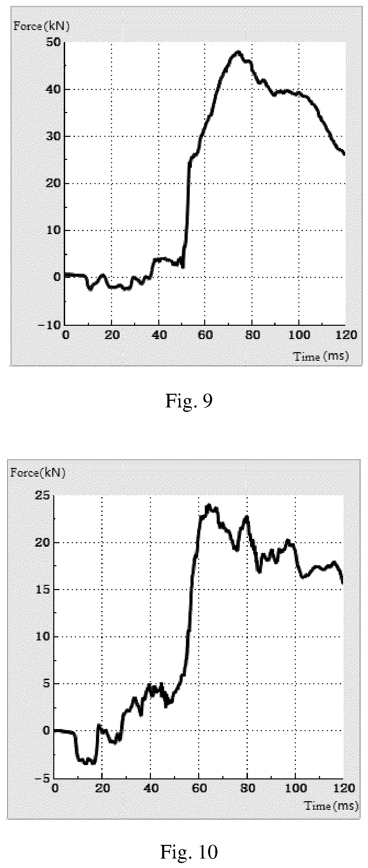

In addition, the invention conducted collision tests on the front cabin assembly in the related art and the invention, and detected the shear load effect borne on the connecting bolt in the second direction, specifically as shown in Fig. 9 and Fig. 10. From Fig. 9, it can be seen that a peak acting force of the shear load borne on the connecting bolt in the second direction in the related art is 48 kN, while in the embodiment of the invention, a peak acting force of the shear load borne on the connecting bolt in the second direction is 24 kN, and the shear load borne on the connecting bolt 111 in the second direction has decreased by nearly 1 time.

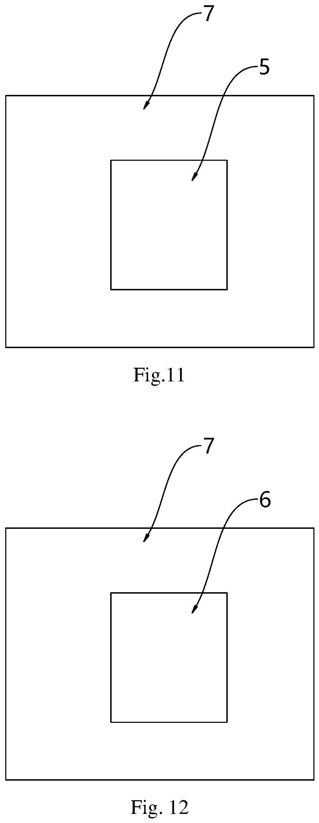

As shown in Figs. 11 and 12, a third aspect of the invention further provides a vehicle 7, including the front cabin stiffener above, or the front cabin assembly 6 above.

In addition, unless otherwise specified or limited, terms such as "connected", "mounted", "linked", and "fixed" may be interpreted broadly, and may be implemented in a manner known to those skilled in the art, for example, in a non-detachable manner such as welding, in a detachable manner such as bolts, or in an integrally molded manner such as molding. The above definition is merely used to assist in explaining the invention and should not be construed as limiting.

The preferred embodiments of the invention are described above in detail with reference to the accompanying drawings. However, the invention is not limited to the specific details in the above embodiments. Within the scope of the technical concept of the invention, various simple modifications can be made to the technical solutions of the invention, and these simple modifications all belong to the protection scope of the invention as defined by the appended claims.

In addition, it is to be noted that all the specific technical features described in the above specific embodiments can be combined in any suitable manner unless they are inconsistent. Various possible combination manners are not illustrated in the disclosure in order to avoid unnecessary repetition.

In addition, the various different embodiments of the invention can also be combined arbitrarily, as long as they do not violate the idea of the invention, and they should also be regarded as the content disclosed in the invention.

## Claims

1. A front cabin stiffener (5), comprising a stiffening beam body (1), wherein a connecting portion (11) extending in a first direction is on the stiffening beam body (1), and the connecting portion (11) is used to be connected with a front shock absorber tower (2), the stiffening beam body (1) is able to translate relative to the front shock absorber tower (2) in a second direction when the front shock absorber tower (2) is collided, a support portion (18) is on the stiffening beam body (1), and the support portion (18) is able to make contact with the front shock absorber tower (2) after the stiffening beam body (1) is translated, so as to push the stiffening beam body (1) to deflect away from the front shock absorber tower (2) in the first direction, and
the first direction is a vertical direction of a vehicle (7), and the second direction is a transverse direction of the vehicle (7).

2. The front cabin stiffener (5) according to claim 1, wherein the support portion (18) comprises a first support portion (13) and a second support portion (14), and the first support portion (13) and the second support portion (14) are respectively located on two sides of the connecting portion (11) in the second direction;
wherein the stiffening beam body (1) has a first state and a second state relative to the front shock absorber tower (2), wherein, when the front shock absorber tower (2) is not collided, the stiffening beam body (1) is in the first state, and, in the second direction, the first support portion (13) and the second support portion (14) do not make contact with the front shock absorber tower (2), and
wherein, when the front shock absorber tower (2) is collided, the stiffening beam body (1) is in the second state, and, in the second direction, the first support portion (13) and the second support portion (14) make contact with the front shock absorber tower (2).

3. The front cabin stiffener (5) according to claim 2, wherein, in the first state and in the second direction, a second translational gap (32) is reserved between the first support portion (13) and the front shock absorber tower (2), a third translational gap (33) is reserved between the second support portion (14) and the front shock absorber tower (2), and a translational stroke of the stiffening beam body (1) is a length dimension of the second translational gap (32) and/or the third translational gap (33) in the second direction.

4. The front cabin stiffener (5) according to claim 2 or 3, wherein the first support portion (13) is a support baffle, and one side face of the support baffle in the second direction is a slope in the second direction, and is able to make contact with the front shock absorber tower (2).

5. The front cabin stiffener (5) according to claim 4, wherein a guiding portion (23) that is arranged obliquely in the second direction is on the front shock absorber tower(2), and the guiding portion (23) is able to be in sliding contact with one side face of the support baffle in the second direction, and
wherein, when the stiffening beam body (1) is in the second state, cooperation between the guiding portion (23) and the support baffle is able to guide the stiffening beam body (1), so that the stiffening beam body (1) deflects away from the front shock absorber tower (2) in the first direction.

6. The front cabin stiffener (5) according to claim 4 or 5, wherein the support baffle comprises a first side plate (131) extending in a third direction and two second side plates (132) extending in the second direction, the two second side plates (132) are opposite to each other, two ends of the first side plate (131) are respectively connected to the two second side plates (132), and a second translational gap (32) is reserved between the first side plate (131) and the front shock absorber tower (2);
wherein the third direction is set to be a forward direction of the vehicle;
wherein, optionally, a surface of the first side plate (131) close to the front shock absorber tower (2) protrudes in a direction away from the front shock absorber tower (2), so that the first side plate (131) forms an arc-shaped plate.

7. The front cabin stiffener (5) according to any one of claims 2 to 6, wherein the second support portion (14) is a support rib, the support rib extends in the second direction to protrude from the stiffening beam body (1), and one end of the support rib protruding from the stiffening beam body (1) in the second direction is able to make contact with the front shock absorber tower (2).

8. The front cabin stiffener (5) according to claim 7, wherein an abutting portion (22) is on the front shock absorber tower (2), and the abutting portion (22) is able to abut against one end of the support rib protruding from the stiffening beam body (1) in the second direction, and
wherein, when the stiffening beam body (1) is in the second state, cooperation between the abutting portion (22) and the support rib is able to push the stiffening beam body (1) to deflect away from the front shock absorber tower (2) in the first direction.

9. The front cabin stiffener (5) according to claim 7 or 8, wherein the support rib is extending in the second direction and oblique towards a front end of the vehicle (7), and the support rib is on one side of the stiffening beam body (1) facing away from a central axis of the vehicle (7) extending in a third direction.

10. The front cabin stiffener (5) according to any one of claims 2 to 9, wherein the connecting portion (11) comprises a connecting bolt (111), a connecting hole (12) is in the stiffening beam body (1), the connecting bolt (111) penetrates through the connecting hole (12) to be connected to the front shock absorber tower (2), a first translational gap (31) is reserved between a hole wall of at least one side of the connecting hole (12) and a side wall of the connecting bolt (111), and a translational stroke of the stiffening beam body (1) is a length dimension of the first translational gap (31) in the second direction.

11. The front cabin stiffener (5) according to claim 10, wherein a first translational gap (31) is reserved between a hole wall of one side of the connecting hole (12) close to a central axis of the vehicle extending in a third direction and the side wall of the connecting bolt (111), so that, in the second direction, the first translational gap (31) is close to the central axis of the vehicle extending in the third direction;
wherein, optionally, in the first state and in the second direction, a second translational gap (32) is reserved between the first support portion (13) and the front shock absorber tower (2), a third translational gap (33) is reserved between the second support portion (14) and the front shock absorber tower (2), and a width of the first translational gap (31), a width of the second translational gap (32), and a width of the third translational gap (33) are approximately the same.

12. The front cabin stiffener according to claim 10 or 11, wherein the connecting hole (12) has two first axes extending in the first direction, the front shock absorber tower (2) is provided with a screw hole (21) that cooperates with the connecting bolt (111), the screw hole (21) has a second axis extending in the first direction, one of the first axes overlaps with the second axis, and the other of the first axes does not overlap with the second axis;
wherein, optionally, the connecting hole (12) is an obround hole or an elliptical hole.

13. The front cabin stiffener (5) according to any one of claims 1 to 12, wherein the stiffening beam body (1) comprises a first cross beam (15), a second cross beam (16), and two oblique beams (17) arranged opposite to each other, the first cross beam (15) and the second cross beam (16) both extend in the second direction, the oblique beams (17) extend in the third direction, one end of each of the two oblique beams (17) are respectively connected to two ends of the first cross beam (15), another end of each of the two oblique beams (17) are connected to each other to make the stiffening beam body (1) form a triangle, two ends of the second cross beam (16) are respectively connected to middles of the two oblique beams (17), and
two ends of the first cross beam (15) and/or the second cross beam (16) are each provided with the connecting portion (11) and the support portion.

14. A front cabin assembly (6), comprising a front shock absorber tower (2) and the front cabin stiffener (5) according to any one of claims 1 to 13, wherein a connecting portion (11) of the front cabin stiffener (5) is connected to the front shock absorber tower (2).

15. A vehicle (7), comprising the front cabin stiffener (5) according to any one of claims 1 to 13 or the front cabin assembly (6) according to claim 14.
